# EUROPEAN PATENT APPLICATION

(11) **EP 4 164 197 A1**
(43) Date of publication of application: **12.04.2023**
(21) Application number: 21863708.0
(22) Date of filing: 03.09.2021
(51) Int. Cl.: H04L 61/00, G06F 9/455

(54) **VIRTUAL IP MANAGEMENT METHOD AND APPARATUS, ELECTRONIC DEVICE AND STORAGE MEDIUM**

(30) Priority: 07.09.2020 CN 202010930319
(71) Applicant: ZTE Corporation, Shenzhen, Guangdong 518057 (CN)
(72) Inventor: ZHANG, Jianchun, Shenzhen, Guangdong 518057 (CN)
(74) Representative: Zoli, Filippo
(86) International application number: PCT/CN2021/116491
(87) International publication number: WO 2022/048646

(57) **Abstract**

A virtual IP management method and apparatus, an electronic device and a storage medium. Said method comprises: sending a request message to a first virtual network card corresponding to a first virtual IP (S110); when it is determined that the current state of the first virtual IP is an invalid state, sending the request message to at least one second virtual network card; and when a request response message sent by one of the second virtual network cards is received, sending a forwarding entry update notification to a switch, so as to update an Mac address, in a forwarding entry and corresponding to the first virtual IP, to be an Mac address of the second virtual network card sending the request response message (S150).

## Description

### CROSS-REFERENCE TO RELATED APPLICATION

This application is filed on the basis of Chinese patent application No. 202010930319.X filed on September 7, 2020, and claims the priority of the Chinese patent application, the entire contents of which are incorporated herein by reference.

### TECHNICAL FIELD

The present disclosure relates to the technical field of communication, in particular to a method and apparatus for managing a virtual IP address, an electronic device, and a storage medium.

### BACKGROUND

Generally, a virtual network function in a network service scenario includes two or more virtual machines, and one of the virtual machines is selected as the main virtual machine, and the rest of the virtual machines serve as standby virtual machines. The virtual network function assigns an additional IP address for the main virtual machine, which is different from the IP address of the virtual machine, and this IP address is called a virtual IP address. The virtual network function communicates with another virtual network function through the virtual IP address of the active virtual machine. When a failure of the main virtual machine occurs, the provided communication services will be interrupted. In such a case, the virtual network function will promptly select a new main virtual machine and assign the original virtual IP address to the newly selected main virtual machine, so as to provide continuous and uninterrupted services. After the virtual IP address is assigned by the virtual network function, the Media Access Control (MAC) address corresponding to the virtual IP becomes the MAC address of the new main virtual machine. It is necessary for all switches in the network to update the forwarding table entries, and modify the MAC address of the corresponding virtual IP to the MAC address of the new active virtual machine. However, at present, the update of forwarding table entries relies on the initiative sending of messages by virtual network functions. Therefore, service interruption will happen when the messages from virtual network functions are lost, leading to deterioration in the service reliability.

### SUMMARY

The following is a summary of the subject matter described herein. This summary is not intended to limit the scope of protection of the claims.

Some embodiments of the present disclosure provide a method and apparatus for managing a virtual IP address, an electronic device, and a storage medium.

According to an aspect of the present disclosure, there is provided a method for managing a virtual Internet Protocol (IP) address, which includes, sending a request message to a first virtual network card corresponding to a first virtual IP address; updating state information of the first virtual IP address in a first virtual IP state table, in response to a failure in reception of a response to the request message from the first virtual network card; determining a current state of the first virtual IP address according to the state information of the first virtual IP address in the first virtual IP state table; sending the request message to at least one of a plurality of second virtual network cards in response to a determination that the current state of the first virtual IP address is an inactive state; and sending a notification for updating forwarding table entry to a switch, in response to the reception of the response to the second request message sent by one of the plurality of the second virtual network cards, such that a Media Access Control (MAC) address corresponding to the first virtual IP address in the forwarding table entry is updated to the MAC address of the second virtual network card that sends the response to the request message.

According to another aspect of the present disclosure, there is provided an apparatus for managing a virtual IP address, which includes, a southbound interface module, configured to send a request message to a first virtual network card corresponding to a first virtual IP; a virtual IP serving module, configured to update state information of the first virtual IP address in a first virtual IP state table, in response to a failure in reception of a response to a request message from the first virtual network card, determine a current state of the first virtual IP address according to the state information of the first virtual IP address in the first virtual IP state table, and send the request message to at least one of a plurality of second virtual network cards through the southbound interface module in response to a determination that the current state of the first virtual IP address is an inactive state; and a forwarding table entry management module, configured to send a notification for updating a forwarding table entry to a switch through the southbound interface module, in response to reception by the southbound interface module, of the response to the request message sent by one of the plurality of second virtual network cards, such that an MAC address corresponding to the first virtual IP address in the forwarding table entry is updated to the MAC address of the second virtual network card that sends the response to the request message.

According to yet another aspect of the present disclosure, there is provided an electronic device, which includes a processor, and a memory storing thereon a processor-executable computer program which, when executed by the processor, causes the processor to carry out the method as described above.

According to yet another aspect of the present disclosure, there is provided a computer-readable storage medium storing a computer program which, when executed by a processor, causes the processor to carry out the method as described above.

Other features and advantages of the present disclosure will be illustrated in the following description, and in part will be apparent from the description, or may be understood by practicing the present disclosure. The objects and other advantages of the present disclosure can be realized and obtained by the structure particularly set forth in the description, claims and drawings.

### BRIEF DESCRIPTION OF DRAWINGS

The drawings are intended to provide a further understanding of the technical scheme of the present disclosure, and form a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing a network architecture applicable to an embodiment of the present disclosure;
FIG. 2 depicts a schematic diagram showing an SDN controller according to an embodiment of the present disclosure;
FIG. 3 depicts a flowchart showing a method for managing a virtual IP address according to an embodiment of the present disclosure;
FIG. 4 depicts a flowchart showing an apparatus for managing a virtual IP address according to an embodiment of the present disclosure; and
FIG. 5 depicts a schematic diagram showing an electronic device according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation to the present disclosure.

It shall be understood, in the description of some embodiments of the present disclosure, the term "first" and "second", if described, are intended for distinguishing technical features, which shall not be understood as indicating or implying relative importance or implicitly indicating the number of the indicated technical features or the order of the indicated technical features. "At least one" means one or more, and "multiple" means two or more. The connection "and/or", which describes the association relationship of related objects, indicates that there can be three relationships, for example, A and/or B, which can indicate A alone, A and B in combination, or B alone. Each of A and B can be single or multiple. The character "/" generally indicates that the connected objects are in "OR" relationship. "At least one of the following" and its similar expressions refer to any combination of these items, including any combination of single or plural items. For example, "at least one of A, B and C" can indicate, A alone; B alone; C alone; A and B in combination; B and C in combination; A and C in combination; or A, B, and C in combination, where each of A, B and C can be single or multiple.

In addition, the technical features involved in the embodiments of the present disclosure described below can be combined with each other without conflict.

In order to facilitate the understanding, the technical background of some embodiments of the present disclosure is introduced first.

A virtual network function in the service scenario based on the Software Defined Network (SDN) usually includes two or more virtual machines, and one of the virtual machines is selected as the main virtual machine, and the rest of the virtual machines are served as standby virtual machines. The virtual network function assigns an additional Internet Protocol (IP) address for the main virtual machine, which is different from the IP address of the virtual machine itself, and the additional IP address is called a virtual IP address. The virtual network function communicates with another virtual network function through the virtual IP address of the active virtual machine. When a failure of the main virtual machine occurs, the provided communication services will be interrupted. In such a case, the virtual network function will promptly select a new main virtual machine and assign the original virtual IP address to the newly selected main virtual machine, so as to provide continuous and uninterrupted services. After the virtual IP address is assigned by the virtual network function, the Media Access Control (MAC) address corresponding to the virtual IP becomes the MAC address of the new main virtual machine. It is necessary for all switches in SDN network to update the forwarding table entries, and modify the MAC address of the corresponding virtual IP to the MAC address of the new active virtual machine.

At present, there exist some methods for SDN networks to update the forwarding table entries of all switches

The first method lies in that, the SDN controller learns the new MAC address and updates the forwarding table entries of all switches. This method is frequently applied to the case where the uplink switch of the virtual machine is running the OpenFlow protocol. The new main virtual machine sends a free Address Resolve Protocol (ARP) / Neighbor Discovery Protocol (ND) message, which carries the virtual IP and the MAC address of the virtual machine itself. The uplink switch of the virtual machine sends the free ARP/ND message to the SDN controller which will learn the new MAC address and update the forwarding table entries of all switches.

The second method lies in that, the switch learns and advertises the new MAC address in the network. This method is frequently applied to the case where the uplink switch of the virtual machine is running the BGP MPLS-Based Ethernet VPN (EVPN) protocol. After the new main virtual machine sends the free ARP/ND message, the switch learns the new MAC address and constructs and advertises the EVPN route to other switches which update the local forwarding table entry after receiving the EVPN route.

The third method is applied to the case where both OpenFlow switch and EVPN switch exist in the SDN network. In that case, the SDN controller is responsible for the synchronization of routing table entries between OpenFlow switch and EVPN switch.

In order to avoid the problem of failure in updating of the forwarding table entry due to the accidental loss of free ARP/ND messages, the existing implementation specifications generally require the new main virtual machine to repeatedly send free ARP/ND messages in a short time to reduce the probability of the problem. However, this can't fundamentally solve the problem of message loss, so some implementations also require the virtual network function to periodically send free ARP/ND messages, which will last the entire life cycle of the main virtual machine.

However, the above methods have the following problems.
(1) Relying on the implementation of virtual network functions. For example, the virtual network function has to support the free ARP/ND to actively advertise the MAC address of the virtual machine, or the virtual network function has to support the periodic sending of free ARP/ND messages. The above methods would not work if a virtual network function does not support the above items.
(2) The loss of free ARP/ND message may cause service interruption. Due to the lacking of a reliable mechanism to ensure the reception of the free ARP/ND message by the SDN controller or the switch, the problem of service interruption caused by the loss of free ARP/ND message can't be fundamentally solved, no matter whether the free ARP/ND message is actively sent when the main virtual machine is assigned with the virtual IP, or periodically sent during the whole life cycle of the main virtual machine.

Based on the above discussion, it can be seen that the existing SDN network solutions to the reliability of virtual IP services are driven by the data plane (free ARP/ND messages are sent through virtual network functions). As the control plane, the SDN controller only senses passively without active participation, so it is incapable to ensure the reliability of virtual IP communication services. In addition, from the perspective of the SDN network, SDN network belongs to the infrastructure of network virtualization, with the purpose of providing network communication services to virtual network functions. Therefore, the SDN network as infrastructure does not need and should not rely on the behavior of virtual network functions to provide reliable communication services.

In view of this, some embodiments of the present disclosure provide a method and apparatus for managing a virtual IP address, an electronic device and a storage medium. Virtual IP addresses are under the management of the control plane. The SDN controller is responsible for maintaining the state of virtual IP addresses, eliminating the reliance on the operations of virtual network functions, and thus providing highly available communication services for virtual IP addresses.

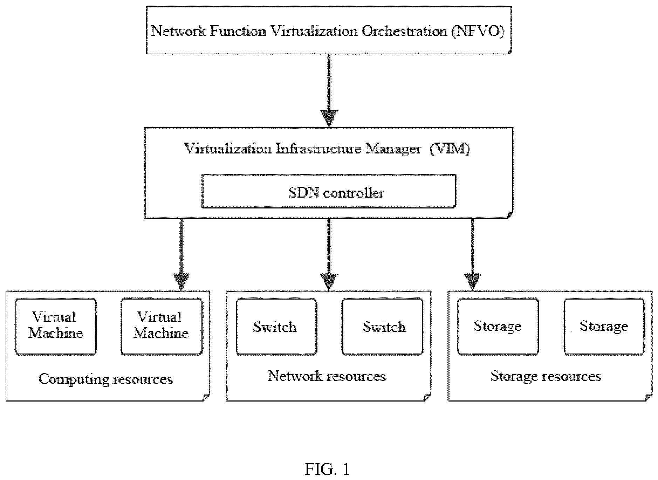

Now, the network architecture to which some embodiments of the present disclosure is applicable will be described. As shown in FIG. 1, the network architecture includes a network function virtualization orchestration (NFVO), a virtualization infrastructure manager (VIM), and a network functions virtualization infrastructure layer (NFVI).

The NFVO is configured to define the network services of virtual network functions, and call the network resources of NFVI with the support of VIM to configure optimized network services for virtual network functions, such as defining virtual IP information and service quality information (such as the maximum interruption time acceptable to a virtual IP address) of virtual network functions.

The VIM is configured to manage all kinds of virtualization software and hardware resources, such as computing resources, network resources and storage resources, and provides a northbound interface for the orchestration layer. The SDN controller also belongs to this layer logically, and is mainly responsible for the management of network resources. The VIM may send the virtual IP address and QoS information of the virtual network function to the SDN controller at the request of the NFVO.

NFVI, this layer contains all kinds of hardware and software resources for virtualization, such as computing resources, network resources and storage resources. All kinds of resources are under the management and allocation of the VIM, except for the network resources which are under the management of the SDN controller.

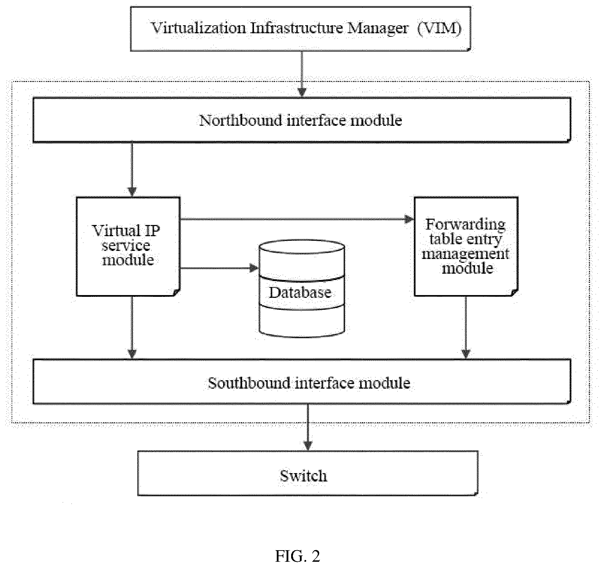

It should be understood that the method for managing a virtual IP address according to an embodiment of the present disclosure can be performed by the SDN controller as described above. As shown in FIG. 2, the SDN controller may include a northbound interface module, a virtual IP service module, a database, a forwarding table entry management module and a southbound interface module.

The northbound interface module is configured to define the northbound programming interface of the virtual IP service, and includes the following interfaces, an interface for creating virtual IP address, and an interface for removing virtual IP address. The VIM can call the above interfaces to create and remove the virtual IP addresses of the virtual network functions and related QoS information.

The virtual IP service module is the main processing module of virtual IP service, and is mainly responsible for managing virtual IP addresses, maintaining the state of virtual IP addresses, managing forwarding table entries related to virtual IP addresses, and handling events of southbound switches.

The database is configured to store a virtual IP information table and a virtual network card information table.

The forwarding table entry management module is responsible for calculating the routing table and maintaining the forwarding table entries of all switches.

The southbound interface module is configured to provide a communication channel between the SDN controller and each switch, such as sending and receiving messages, managing the switch forwarding entry table, and receiving southbound switch events.

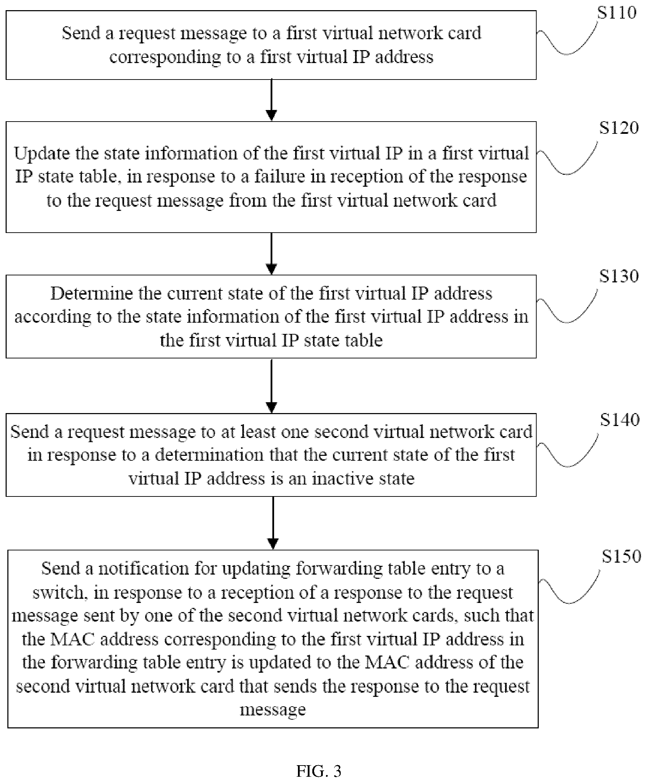

FIG. 3 depicts a flowchart showing a method for managing a virtual IP address according to an embodiment of the present disclosure. As shown in FIG. 3, the method includes the following operations.

At S110, a request message is sent to a first virtual network card corresponding to a first virtual IP address.

It should be understood that the first virtual IP address represents the virtual IP address created by the VIM and assigned to a main virtual machine of a virtual unit. The first virtual network card represents the network card of the main virtual machine currently corresponding to the first virtual IP address.

In some implementations, the SDN controller receives an instruction for creating the first virtual IP sent by VIM through the northbound interface module. The instruction for creating the first virtual IP includes the identifier, address, associated virtual machine network card information and quality service information of the first virtual IP address to be created. In some implementations, the quality service information includes the maximum interruption time acceptable to the virtual IP address.

In some embodiments, the SDN controller, after receiving the instruction for creating the first virtual IP address sent by VIM, creates the first virtual IP information table according to the instruction for creating the virtual IP from the VIM to store the information of the virtual IP address. The items and definitions contained in the first virtual IP information table can be seen in Table 1 below.

**Table 1**

| Data Definition | Data Format | Description |
|---|---|---|
| Virtual IP address identifier | UUID | Key value, which stores the unique identifier of virtual IP address |
| Virtual IPv4 address | IPv4 address | Storing virtual IPv4 address |
| Virtual IPv6 address | IPv6 address | Storing virtual IPv6 address |
| Virtual machine network card information list | List | Unique identifier of the corresponding virtual machine network card is stored in the list |
| Maximum interruption time | Numerical value | Storing the maximum interruption time acceptable to a virtual IP address. |

In some implementations, after the SDN controller creates the first virtual IP information table, a first virtual IP state table can further be created according to the first virtual IP information table. Here, the first virtual IP state table stores the state information of the first virtual IP address. The items and definitions contained in the first virtual IP state table can be seen in Table 2 below.

**Table 2**

| Data Definition | Data Format | Description |
|---|---|---|
| Virtual IP identifier | UUID | Key value, which stores the unique identifier of virtual IP address |
| Virtual IPv4 address | IPv4 address | Storing virtual IPv4 address |
| Virtual IPv6 address | IPv6 address | Storing virtual IPv6 address |
| Virtual machine network card information list | List | The unique identifier of virtual machine network card is stored in the list |
| Detection time interval | Numerical value | Storing detection interval of virtual IP address |
| Current network card ID | UUID | Storing unique identifier of the network card to which the virtual IP address is currently assigned |
| Condition | Enumeration | Storing the detection result of the current virtual IP addresses. The valid values are as follows: |
| | | Null: initial state, indicating the current network card to which the virtual IP is assigned, is unknown; |
| | | Valid: indicates that the virtual IP is active on the current network card to which the |
| | | virtual IP is assigned; |
| | | Detection: indicating a failure in the previous virtual IP address detection |
| | | Failure: indicating the virtual IP is inactive on the current network card to which the virtual IP is assigned |
| | | Removed: indicating the removal of the virtual IP. |
| Last detection time | Time | Storing the valid time at which the previous detection was performed |

In some embodiments, before S110 is performed, the method further includes, acquiring a current network card identifier corresponding to the first virtual IP address from the first virtual IP state table, and determining a first virtual network card to be the current network card corresponding to the first virtual IP address, according to the current network card identifier.

In some examples, the destination MAC address of the request message at S110 should be the MAC address corresponding to the main virtual machine, and the source MAC address should be the MAC address of the SDN controller. The request message can be sent to the first virtual network card corresponding to the first virtual IP address through the southbound interface module of the SDN controller. In some implementations, the request message is an ARP/ND message.

After the request message is sent to the first virtual network card, it is necessary to confirm whether a response to the request message is received from the first virtual network card. The reception of the response to the request message indicates that the current virtual network card of the first virtual IP address (i.e., the first virtual network card) is in an effective state. And S 120 is performed, in response to a failure in the reception of the response to the request message from the first virtual network card.

In some embodiments, in response to a reception of the response to the request message from the first virtual network, the current state of the first virtual IP address is determined to be an active state, and the time at which the current state of the first virtual IP address is determined to be an active state is stored in the first virtual IP state table, and the time is taken as the effective time of the current network card detection.

At S 120, the state information of the first virtual IP address in the first virtual IP state table is updated, in response to a failure in the reception of the response to the request message from the first virtual network card.

In some implementations, the updating of the state information of the first virtual IP address in the first virtual IP state table at S 120 includes the following operations.

The state of the first virtual IP address is updated to a state to be detected when the state information of the first virtual IP address in the first virtual IP state table corresponding to the first virtual IP address indicates an active state.

Alternatively, the state of the first virtual IP address is updated to an inactive state, when the state information of the first virtual IP address in the first virtual IP state table indicates a state to be detected (pending state).

For example, when determining a failure in the reception of the response to the request message from the first virtual network card, the SDN controller reads the state information in the first virtual IP state information, and if the state information is currently indicating an active state, the SDN controller modifies the state information to a state to be detected. After updating the state information of the first virtual IP address to the state to be detected, the SDN controller sends another request message to the first virtual network card corresponding to the first virtual IP address. And when determining another failure in the reception of the response to the request message from the first virtual network card, the SDN controller updates the state information of the first virtual IP address from the state to be detected to an inactive state.

In some embodiments, the SDN controller may send a request message to the virtual network card corresponding to the first virtual IP address at a preset detection time interval to periodically detect the activity of the first virtual IP address. In some implementations, the value of the detection time interval can be determined based on the maximum interruption time acceptable to the first virtual IP address. In some examples, the value of the detection time interval is set to 1/2 of the maximum interruption time acceptable to the first virtual IP address. Thereby, when determining an initial failure in the reception of the response to the request message from the first virtual network card, the SDN controller updates the state information of the first virtual IP address to the state to be detected. Then, the SDN controller sends another request message to the virtual network card corresponding to the first virtual IP address after 1/2 of the maximum interruption time acceptable to the first virtual IP address, so that the service interruption of the first virtual IP address can be found in time, thus avoiding the time of service interruption of the first virtual IP address from exceeding the maximum interruption time acceptable to the first virtual IP address, thereby ensuring the quality of the communication service.

In some embodiments, before updating the state information of the first virtual IP address to an invalid state, the method further includes, acquiring the current valid detection time of network card from the first virtual IP state table, determining a duration during which the current network card is in an inactive state according to the effective time of detection of the current network card, when the duration during which the current network card is in an inactive state exceeds the preset duration threshold, the state is updated to the inactive state, otherwise, the current state is kept unchanged. In some implementations, the preset duration threshold can be the maximum interruption time acceptable to the first virtual IP address. Thereby, the time of service interruption of the first virtual IP address is prevented from exceeding the maximum interruption time acceptable to the first virtual IP address.

At S 130, the current state of the first virtual IP address is determined according to the state information of the first virtual IP address in the first virtual IP state table.

In some examples, the SDN controller reads the state information of the first virtual IP address from the first virtual IP state table to determine the current state of the first virtual IP address and determine whether to perform the subsequent S 140 operation.

At S140, a request message is sent to at least one of the second virtual network cards in response to a determination that the current state of the first virtual IP address is an inactive state.

In some examples, when the current state of the first virtual IP address indicates an inactive state according to the state information of the first virtual IP address in the first virtual IP state table, it means that the first virtual IP address is inactive on the current position (network card), and it is necessary to traverse other virtual network cards (i.e., the second virtual network cards) to send a request message to each of the second virtual network cards, and determine a current network card corresponding to the first virtual IP from at least one of the second virtual network cards.

At S 150, a notification for updating forwarding table entry is sent to a switch, in response to a reception of a response to the request message from one of the second virtual network cards, such that the MAC address corresponding to the first virtual IP address in the forwarding table entry is updated to the MAC address of the second virtual network card that sends the response to the request message.

In some examples, after the request message is sent to at least one of the second virtual network cards, if a certain second virtual network card is the current network card of the first virtual IP address, the second virtual network card will return the response to the request message to the SDN controller. The SDN controller can receive the response to the request message from the second virtual network card through the southbound interface module, and determine the second virtual network card that sends the response to the request message as the current network card corresponding to the first virtual IP address. The forwarding table entry management module encapsulates the MAC address of the second virtual network card that sends the response to the request message into the notification for updating forwarding table entry, and sends the notification for updating forwarding table entry to each switch through the southbound interface module. Each switch can modify the local forwarding table entry according to the notification. Thus, the MAC address corresponding to the first virtual IP address in the forwarding table entry is updated to the MAC address of the second virtual network card that sends the response to the request message.

In some embodiments, after the request message is sent to at least one of the second virtual network cards at S 140, the method further includes, a notification for removing the forwarding table entry is sent to a switch, in response to a failure in the reception of the response to the request message from the second virtual network card, so as to remove the forwarding table entry corresponding to the first virtual IP address in the switch.

In some embodiments, in response to a reception of a response to the request message from one of the second virtual network cards, the second virtual network card that sends the response is determined to be the current network card corresponding to the first virtual IP address, and the current network card identifier in the first virtual IP state table is updated to the network card identifier of the second virtual network card that sends the response.

In some embodiments, after the first virtual IP information table is created according to the instruction for creating the first virtual IP, the first virtual network card information table is also obtained according to the network card identifiers in the first virtual IP information table; and the first virtual network card state table is created according to the first virtual network card information table.

In some examples, the network card identifier in the first virtual IP information table indicates the unique identifier of the current network card. The first virtual network card is determined to be the current network card corresponding to the first virtual IP address according to this identifier, and then the first virtual network card information table is obtained. The items and definitions contained in the first virtual network card information table are shown in Table 3 below.

**Table 3**

| Data Definition | Data Format | Description |
|---|---|---|
| Virtual machine network card identifier | UUID | Key value, which stores the unique identifier of network card |
| MAC address of network card | MAC address | MAC address of network card |
| Switch identifier | Numerical value | Storing the unique identifier of the switch to which the virtual machine network card is connected |
| Interface identifier | Numerical value | Storing the unique identifier of the port of the switch to which the virtual machine network card is connected |

After obtaining the first virtual network card information table, the first virtual network card state table is further created according to the first virtual network card information table to store the status of the first virtual network card in this embodiment. The items and definitions contained in the first virtual network card state table are shown in Table 4 below.

**Table 4**

| Data Definition | Data Format | Description |
|---|---|---|
| Virtual machine card identification | UUID | Key value, which stores the unique identifier of network card |
| MAC address of network card | MAC address | MAC address of network card |
| Switch identifier | Numerical value | Storing the unique identifier of the switch to which the virtual machine network card is connected |
| Port identifier | Numerical value | Storing the unique identifier of the port of the switch to which the virtual machine network card is connected |
| Switch status | Enumeration | Current state of switch, valid values are as follows: |
| | | ● Online: the switch is operating properly |
| | | ● Disconnection: the connection between the SDN controller and the switch is disconnected |
| | | ● Offline: the switch is unavailable |
| Interface status | Enumeration | Current status of interface, valid values are as follows: |
| | | ● On: the status of interface is normal |
| | | ● Off: the status of interface is off |
| | | ● Removed: The interface has been removed. |

In some embodiments, after the request message is sent to the first virtual network card corresponding to the first virtual IP at S 110, the method further includes, acquiring the state information of the first virtual network card from the first virtual network card state table; and determining a failure in the reception of the response to the request message from the first virtual network card, when the state information of the first virtual network card indicates the inactivity of the first virtual network card (for example, the switch is disconnected or offline) or an unassigned virtual IP address (for example, the interface is shut down or the interface has been removed).

In some embodiments, the method according to an embodiment of the present disclosure further includes, receiving switch state change information sent by the switch, and updating the switch state information in the first virtual network card state table according to the switch state change information.

In some embodiments, the method according to an embodiment of the present disclosure further includes, receiving interface state change information sent by the switch, and updating the interface state information in the first virtual network card state table according to the interface state change information.

In some embodiments, the method according to an embodiment of the present disclosure further includes, receiving an instruction for removing the first virtual IP address sent by VIM, and updating the state information of the first virtual IP address to a removed state according to the instruction for removing the first virtual IP address.

By means of the method for managing a virtual IP according to an embodiment of the present disclosure, the SDN controller no longer relies on virtual network functions to send free ARP/ND messages, which solves the problem in loss of free ARP/ND messages, and reduces the requirements for network functions at the same time. It is not necessary for the virtual network functions to periodically send free ARP/ND messages, so as to avoid excessive consuming of network resources by these broadcast messages. The virtual IP information of virtual network function is specified during the design of virtual network function with QoS information, such that the SDN controller can provide different services according to different QoS requirements of different virtual IPs to ensure that the service interruption time meets the QoS requirements.

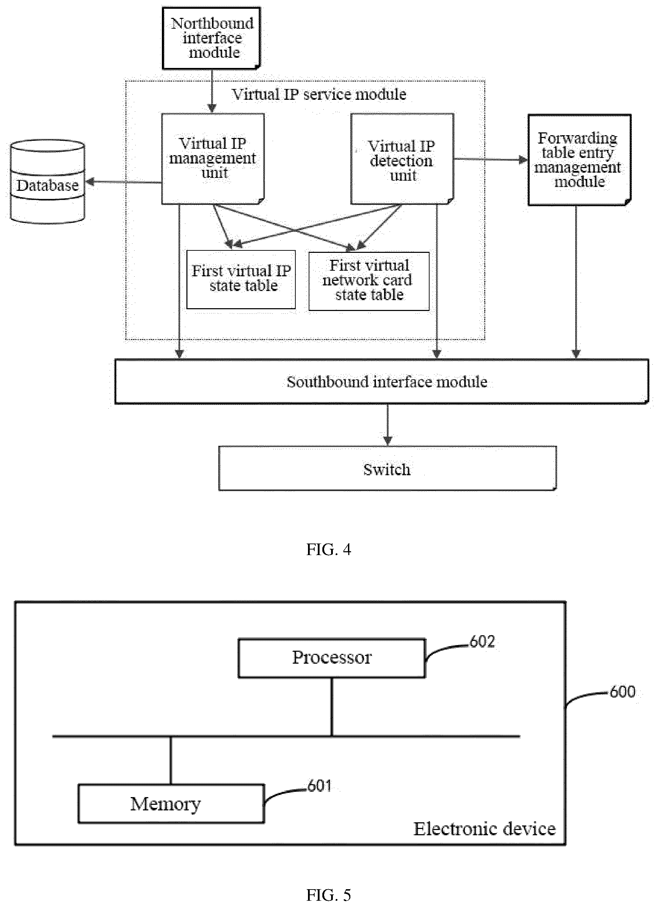

FIG. 4 depicts an apparatus for managing a virtual IP is provided according to an embodiment of the present disclosure, which can be deployed in an SDN server. As shown in FIG. 4, the apparatus includes the following.

A southbound interface module, which is configured to send a request message to the first virtual network card corresponding to the first virtual IP address.

A virtual IP service module, which is configured to update the state information of the first virtual IP address in the first virtual IP state table, in response to a failure in the reception of the response to the request message from the first virtual network card, determine the current state of the first virtual IP address is determined according to the state information of the first virtual IP address in the first virtual IP state table, and send a request message to at least one off the second virtual network cards through the southbound interface module in response to a determination that the current state of the first virtual IP address is an inactive state.

And a forwarding table entry management module, which is configured to send a notification for updating forwarding table entry to a switch through the southbound interface module, in response to a reception by the southbound interface module, of a response to the request message from one of the second virtual network cards, such that the MAC address corresponding to the first virtual IP address in the forwarding table entry is updated to the MAC address of the second virtual network card that sends the response to the request message.

In some embodiments, the virtual IP service module includes a virtual IP management unit and a virtual IP detection unit.

The virtual IP detection unit is configured to update the state information of the first virtual IP address in the first virtual IP state table, in response to a failure in the reception of the response to the request message from the first virtual network card, determine the current state of the first virtual IP address is determined according to the state information of the first virtual IP address in the first virtual IP state table, and send a request message to at least one of the second virtual network cards through the southbound interface module in response to a determination that the current state of the first virtual IP address is an inactive state.

In some embodiments, the virtual IP detection unit is further configured to determine the current state of the first virtual IP address to be an active state in response to a reception of the response to the request message from the first virtual network.

In some embodiments, the virtual IP management unit is configured to store the time at which the current state of the first virtual IP address is determined to be an active state in the first virtual IP state table, and take the time as the effective time of the current network card detection.

In some embodiments, the virtual IP management unit is further configured to update the state of the first virtual IP address to a state to be detected when the state information of the first virtual IP address in the first virtual IP state table corresponding to the first virtual IP address indicates an active state, and update the state of the first virtual IP address to an inactive state, when the state information of the first virtual IP address in the first virtual IP state table indicates a state to be detected.

In some embodiments, the virtual IP detection unit is further configured to send a request message to the virtual network card corresponding to the first virtual IP at a preset detection time interval.

In some embodiments, the virtual IP management unit is further configured to acquire the current valid detection time of the network card from the first virtual IP state table, determine a duration during which the current network card is in an inactive state according to the effective time of detection of the current network card, and when the duration during which the current network card is in an inactive state exceeds the preset duration threshold, update the state to the inactive state.

In some embodiments, the virtual IP detection unit is further configured to acquire a current network card identifier corresponding to the first virtual IP address from the first virtual IP state table, and determine a first virtual network card to be the current network card corresponding to the first virtual IP address, according to the current network card identifier.

In some embodiments, the virtual IP management unit is further configured to determine the second virtual network card that sends the response to be the current network card corresponding to the first virtual IP address, and update the current network card identifier in the first virtual IP state table to the network card identifier of the second virtual network card that sends the response.

In some embodiments, the apparatus further includes a northbound interface module configured to receive an instruction for creating the first virtual IP sent by the VIM.

In some embodiments, the virtual IP management unit is further configured to create a first virtual IP information table according to the instruction for creating the first virtual IP information table, and create a first virtual IP state table according to the first virtual IP information table. The first virtual IP information table can be stored in a database.

In some embodiments, the virtual IP management unit is further configured to acquire the first virtual network card information table according to the network card identifiers in the first virtual IP information table; and create the first virtual network card state table according to the first virtual network card information table. In some examples, the first virtual network card information table is stored in a database.

In some embodiments, the virtual IP management unit is further configured to acquire the first virtual network card information table according to the network card identifiers in the first virtual IP information table; and create the first virtual network card state table according to the first virtual network card information table.

In some embodiments, the virtual IP detection unit is further configured to acquire the state information of the first virtual network card from the first virtual network card state table; and determine a failure in the reception of the response to the request message from the first virtual network card, when the state information of the first virtual network card indicates the inactivity of the first virtual network card or unassigned virtual IP.

In some embodiments, the southbound interface module is further configured to receive switch state change information and/or interface state change information sent by the switch.

In some embodiments, the virtual IP management unit is further configured to update the switch state information in the first virtual network card state table according to the switch state change information.

In some embodiments, the virtual IP management unit is further configured to update the interface state information in the first virtual network card state table according to the interface state change information.

In some embodiments, the northbound interface module is further configured to receive an instruction for removing the first virtual IP address sent by the VIM.

In some embodiments, the virtual IP management unit is further configured to update the state information of the first virtual IP address to a removed state according to the instruction for removing the first virtual IP address.

In some embodiments, the forwarding table entry management module is further configured to send through the southbound interface module, a notification for removing the forwarding table entry to a switch, in response to a failure in the reception of the response to the request message from the second virtual network card, so as to remove the forwarding table entry corresponding to the first virtual IP address in the switch.

It can be further understood that in the above-mentioned embodiments, the descriptions of each embodiment focus on their respective parts, and the parts not detailed or recited in one embodiment can be referred to the related descriptions of another embodiment.

FIG. 5 depicts an electronic device 600 according to an embodiment of the present disclosure. As shown in FIG. 5, the electronic device 600 includes, but is not limited to the following.

A memory 601 which is configured to store a program.

And a processor 602 which is configured to execute the program stored in the memory 601, and the program stored in the memory 601, when is executed by the processor 602 causes the processor 602 to carry out the method for managing a virtual IP.

The processor 602 and the memory 601 may be connected by a bus or other means.

As a non-transitory computer-readable storage medium, the memory 601 can be configured to store non-transitory software programs and non-transitory computer-executable programs, such as the method for managing a virtual IP address as described in any of the embodiments of the present disclosure. The processor 602 executes the non-transitory software programs and instructions stored in the memory 601, thereby implementing the method for managing a virtual IP address as described above.

The memory 601 may include a program storage section and a data storage section, in which the program storage section may store an operating system and application programs for performing at least one operation, and data storage section may store program of the method for managing a virtual IP address as described above. In addition, the memory 601 may include a high-speed random-access memory and a non-transitory memory, such as at least one disk memory device, a flash memory device, or other non-transitory solid-state memory devices. In some implementations, the memory 601 may include memories remotely located relative to the processor 602, and these remote memories may be connected to the processor 602 through a network. Examples of the above networks include, but are not limited to, the Internet, intranet, local area network, mobile communication network, and combinations thereof.

Non-transitory software programs and instructions for implementation of the method for managing a virtual IP address above are stored in the memory 601, and when executed by one or more processors 602, causes the processors to carry out the method for managing a virtual IP as described in any of the embodiments of the present disclosure.

An embodiment of the present disclosure further provides a storage medium, which stores computer-executable instructions which, when executed by a processor, causes the processor to carry out the method for managing a virtual IP address as described above.

In an embodiment, the storage medium stores computer-executable instructions which, when are executed by one or more control processors 602, for example, by one of the processors 602 in the electronic device 600, cause the one or more processors 602 to carry out the method for managing a virtual IP address as described in any of the embodiments of the present disclosure.

An embodiment of the present disclosure includes, sending a request message to a first virtual network card corresponding to a first virtual IP address; updating state information of the first virtual IP address in the first virtual IP state table, in response to a failure in reception of a response to the request message from the first virtual network card; determining a current state of the first virtual IP address according to the state information of the first virtual IP address in the first virtual IP state table; sending the request message to at least one of a plurality of second virtual network cards in response to a determination that the current state of the first virtual IP address is an inactive state; and sending a notification for updating forwarding table entry to a switch, in response to the reception of the response to the second request message from one of the plurality of the second virtual network cards, such that an MAC address corresponding to the first virtual IP address in the forwarding table entry is updated to the MAC address of the second virtual network card that sends the response to the request message. By means of some embodiments of the present disclosure, the reliance on the initiative sending of messages by virtual network functions for the updating of forwarding table entries are eliminated, so that the problem of service interruption caused by message loss is solved, and the requirements on the network functions are also lowered.

The above-described embodiments are only schematic, in which the units illustrated as separate components may or may not be physically separated, that is, they may be located in one place or distributed over several network units. Some or all of the modules can be selected according to the practical needs to achieve the purpose of this embodiment.

It shall be appreciated by those having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to those having ordinary skills in the art, the term computer storage medium includes volatile and nonvolatile, removable and non-removable medium implemented in any method or technology for storing information such as computer-readable instructions, data structures, program modules or other data. Computer storage mediums include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for some embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for managing a virtual Internet Protocol, IP, address, comprising,
sending a request message to a first virtual network card corresponding to a first virtual IP address;
updating state information of the first virtual IP address in a first virtual IP state table, in response to a failure in a reception of a response to the request message from the first virtual network card;
determining a current state of the first virtual IP address according to the state information of the first virtual IP address in the first virtual IP state table;
sending the request message to at least one of a plurality of second virtual network cards in response to a determination that the current state of the first virtual IP address is an inactive state; and
sending a notification for updating forwarding table entry to a switch, in response to the reception of the response to the request message sent by one of the plurality of the second virtual network cards, such that a Media Access Control, MAC, address corresponding to the first virtual IP address in the forwarding table entry is updated to the MAC address of the second virtual network card that sends the response to the request message.

2. The method according to claim 1, wherein updating state information of the first virtual IP address in the first virtual IP state table comprises,
updating the state of the first virtual IP address to a state to be detected in response to the state information of the first virtual IP address in the first virtual IP state table indicating an active state.

3. The method according to claim 1, wherein updating state information of the first virtual IP address in the first virtual IP state table comprises,
updating the state of the first virtual IP address to an inactive state, in response to the state information of the first virtual IP address in the first virtual IP state table indicating a state to be detected.

4. The method according to claim 3, further comprising,
periodically sending the request message to a virtual network card corresponding to the first virtual IP address at a preset detection time interval;
determining the current state of the first virtual IP address to be an active state in response to the reception of the response to the request message from the first virtual network card;
storing a time at which the current state of the first virtual IP address is determined to be an active state in the first virtual IP state table, and taking the time as an effective time of detection of a current network card; and
before updating the state information of the first virtual IP address to the inactive state, the method further comprises,
acquiring the effective time of detection of the current network card from the first virtual IP state table; and
determining a duration during which the current network card is in an inactive state according to the effective time of detection of the current network card, and updating the state information to the inactive state in response to a determination that the duration during which the current network card is in the inactive state exceeds a preset duration threshold.

5. The method according to claim 1, wherein before sending the request message to the first virtual network card corresponding to the first virtual IP address, the method further comprises,
receiving an instruction for creating a first virtual IP information table sent by a virtualization infrastructure manager, VIM, and creating the first virtual IP information table according to the instruction for creating the first virtual IP information table; and
creating the first virtual IP state table according to the first virtual IP information table.

6. The method according to claim 5, wherein after creating the first virtual IP information table according to the instruction for creating the first virtual IP information table, the method further comprises,
acquiring a first virtual network card information table according to a network card identifier in the first virtual IP information table;
creating a first virtual network card state table according to the first virtual network card information table; and
after sending the request message to the first virtual network card corresponding to the first virtual IP address, the method further comprises,
acquiring state information of the first virtual network card from the first virtual network card state table; and
determining a failure in reception of the response to the request message from the first virtual network card, in response to the state information of the first virtual network card indicating an inactivity of the first virtual network card or an unassigned virtual IP address.

7. The method according to claim 6, further comprises at least one of,
receiving switch state change information sent by the switch, and updating the switch state information in the first virtual network card state table according to the switch state change information; or
receiving interface state change information sent by the switch, and updating the interface state information in the first virtual network card state table according to the interface state change information.

8. The method according to claim 5, further comprising,
receiving an instruction for removing the first virtual IP address sent by the VIM, and updating the state information of the first virtual IP address to a removed state according to the instruction for removing the first virtual IP address.

9. The method according to claim 1, further comprising,
sending a notification for removing a forwarding table entry to a switch, in response to the failure in the reception of the response to the request message from the second virtual network card, so as to remove the forwarding table entry corresponding to the first virtual IP address in the switch.

10. An apparatus for managing a virtual Internet Protocol, IP, address, comprising,
a southbound interface module, configured to send a request message to a first virtual network card corresponding to a first virtual IP;
a virtual IP serving module, configured to update state information of the first virtual IP address in a first virtual IP state table, in response to a failure in a reception of a response to a request message from the first virtual network card, determine a current state of the first virtual IP address according to the state information of the first virtual IP address in the first virtual IP state table, and send the request message to at least one of a plurality of second virtual network cards through the southbound interface module in response to a determination that the current state of the first virtual IP address is an inactive state; and
a forwarding table entry management module, configured to send a notification for updating a forwarding table entry to a switch through the southbound interface module, in response to reception by the southbound interface module, of the response to the request message sent by one of the plurality of second virtual network cards, such that a Media Access Control, MAC, address corresponding to the first virtual IP address in the forwarding table entry is updated to the MAC address of the second virtual network card that sends the response to the request message.

11. An electronic device, comprising a processor, and a memory storing thereon a processor-executable computer program which, when executed by the processor, causes the processor to carry out the method according to any one of claim 1 to claim 9.

12. A computer readable storage medium storing a computer program which, when executed by a processor, causes the processor to carry out the method according to any one of claim 1 to claim 9.
